# EUROPEAN PATENT APPLICATION

(11) **EP 0 690 238 A1**
(43) Date of publication of application: **03.01.1996**
(21) Application number: 95201466.0
(22) Date of filing: 02.06.1995
(51) Int. Cl.: F16B 1/00, F16B 37/08, A47K 13/26

(54) **Nut which can be quickly detached by means of tilting and sliding axially**

(30) Priority: 02.06.1994 IT MI941151
(71) Applicant: METAFORM LUCCHESE S.p.A., I-55060 Monsagrati (Lucca) (IT)
(72) Inventor: Cattaneo, Angelo, I-55100 Lucca (IT)
(74) Representative: De Nova, Roberto

(57) **Abstract**

A fastening device (1) for a bathroom fitting, in particular for retaining a seat (2) to a WC bowl (5), which can be quickly installed and is of robust construction, comprises a screw (8) having a long threaded shank (10) and a nut (12) substantially spool-shaped, with an axially extending passageway (17) into which two half internal threads (18,19) are arranged to project, which are coaxial with, oppositely located and axially spaced apart from each other, said passageway (17) having sufficient dimensions to allow the disengagement of the half internal threads (18,19) from the threaded shank (10) by tilting the nut (12) relative to the shank (10).

## Description

The present invention relates to a fastening device for retaining a bathroom fitting, particularly but not exclusively for retaining a seat to a WC bowl, being of the type which comprises a screw having a long threaded shank and a nut.

As is known, fastening devices of the type specified above show the demand to be quickly fixed.

In particular, it is required that the nut need not be patiently screwed all along the threaded shank, but might be freely slidably fitted onto it and then screwed and tightened down only once it has approached its final upper position.

Many solutions have been suggested to fill this demand which mostly use elastically deformable nuts from a normal spread open position, in which the nuts have a larger diameter, to a position in which the nuts are snapped tightly around the shank.

Such solutions, while being satisfactory from many aspects and substantially achieving their object, yet are complicated and involve the use of elastically deformable materials which may not provide an adequate strength.

The underlying problem of the present invention is to provide a fastening device of the type specified above, which has such constructional and functional features as to meet the above-mentioned demand and, concurrently therewith, overcome the drawbacks cited with reference to the prior art.

This problem is solved by a fastening device of the type specified above characterized in that the nut comprises a substantially spool-shaped body formed with a passageway extending axially therethrough and having two half internal threads which are coaxial with, oppositely located from each other, projecting into the passageway and spaced apart axially, the passageway having sufficient dimensions to allow the half female internal threads to become disengaged from the threaded shank by fitting the body relative to the shank.

Further features and the advantages of the fastening device according to the present invention will be apparent from the following description of a preferred embodiment thereof, given by way of example and not of limitation with reference to the accompanying drawing figures, of which:

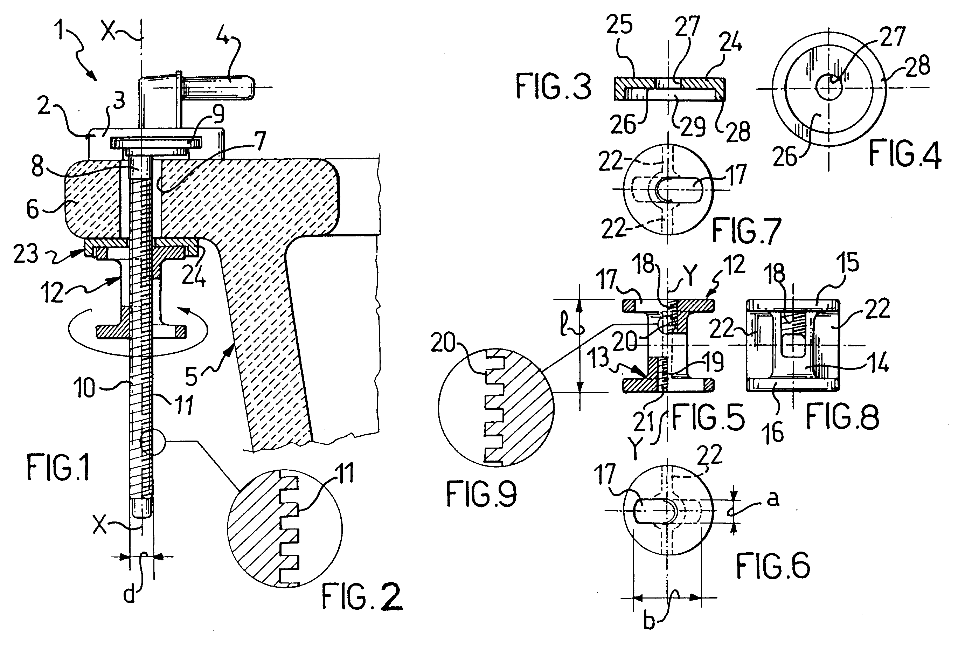

Figure 1 is a part-sectional elevation view of the fastening device according to the invention in its installed condition;
Figure 2 is a sectional view, drawn to an enlarged scale, of a detail of the device in Figure 1;
Figure 3 is a sectional elevation view of another detail of the device in Figure 1;
Figure 4 is a bottom view of the detail in Figure 3;
Figure 5 is a sectional elevation view of another detail of the device in Figure 1;

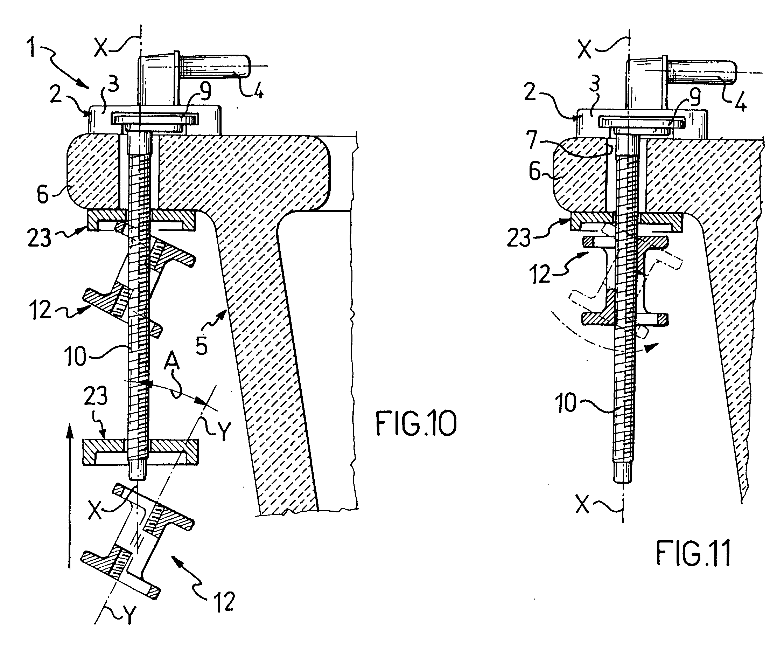

Figures 6, 7 and 8 are a top. bottom and side view, respectively, of the device in Figure 5;
Figure 9 is a sectional view, drawn to an enlarged scale, of a portion of the detail in Figure 5; and
Figures 10 and 11 are elevation views of the device in Figure 1 at successive steps of its installation.

With reference to the accompanying drawing figures, generally shown at 1 is a fastening device intended for retaining a bathroom fitting, in particular a seat 2, being quite conventional and only shown by a fixed base 3 thereof which is provided with a pin 4, to a WC bowl 5, also quite conventional and only shown by a rear edge 6 thereof which is through-penetrated by a hole 7.

The fastening device 1 comprises a screw 8 having a head 9 and a long shank 10 with an axis X-X, which shank 10 is formed with an external thread 11 having an outside diameter d, and a clamping nut 12. The head 9 holds the fixed base 3, and the shank 10 extends through the hole 7.

The screw 8 is preferably made of a metal material, such as zinc-galvanized iron, or stainless steel.

The nut 12 comprises a body 13, substantially spool-shaped and having a predetermined length and an axis Y-Y.

The body 13 has a cylindrical middle portion 14 with a small diameter, an end termination 15 with a large diameter, and preferably a similar termination 16 at the opposite end.

A passageway 17 is formed along the body 13 and extends axially therethrough.

Two half internal threads 18 and 19 are coaxial with each other and with the axis Y-Y, oppositely located from each other, and projecting into the passageway 17. They are arranged at an axial spacing from each other on their ends next to the terminations 15 and 16, respectively. In particular, their length is approximately one third of the body length l, and they are located on the body ends such as to be a mutual distance apart which is substantially equal to the remaining third of said length l.

The two half internal threads 18 and 19 have respective female threads 20 and 21 which mate with the external thread 11 on the threaded shank 10 and engage with it when the axis X-X of the shank 10 comes to be coincident with the axis Y-Y of the body 13.

The threads 11, 20 and 21 are preferably rectangular shaped.

It should be noted that the axial passageway 17 is substantially slotted bore shaped, having a width dimension "a" which is slightly greater than the outside diameter "d" of the threaded shank 10 and a length "b" which is sufficient to allow the female threads 20 and 21 of the two internal threads 18 and 19 to become disengaged from the external thread 11 of the threaded shank 10 when the axis Y-Y of the body 13 forms an angle "A" with the shank axis X-X. In the example shown, the angle "A" is approximately 30°. For a more convenient tightening of the nut 12, the body 13 is provided with two opposite wings, both indicated at 22 and extending perpendicularly to the slotted bore.

The fastening device 1 further comprises a centering means 23 which are implemented by a disk 24 having a top face 25, a bottom face 26, and a central hole 27.

The diameter of the hole 27 is selected such that the threaded shank 10 can be passed through it with a limited clearance therebetween.

The disk 24 has its bottom face 26 formed with an annular rim 28 which defines a socket 29 intended for engagement with limited clearance by the termination 15 or the termination 16 of the body 13.

Both the body 13 and the disk 24 may be formed from a suitable high strength material. For example, a high density plastics material, such as nylon, may be selected for the disk 24.

For the spool-shaped body 13, either a high density plastics material, such as nylon, or a metal material, such as zinc-galvanized iron or stainless steel, may be selected.

The desired securement of the seat 2 on the WC bowl 5 is obtained by installing the screw 8 through the bowl edge 6 such that a portion of its shank 10 will projects downwards. Thereafter, the disk 23 is first fitted in a freely slidable manner all the way along the projecting portion of the shank 10 until its top face 25 abuts against the rim 28. The body 13 is grasped, with either termination upwards, and started along the shank such that its axis Y-Y will form the angle "A" with the shank axis X-X. The body 13 is then pushed up along the shank 10, in just as freely sliding a manner, until its termination 15 or 16 touches at one point thereof the bottom face 25 of the disk 24. Presently, the body 13 is straightened up to bring its axis Y-Y to coincide with the axis X-X, thereby causing the female threads 20, 21 of the two half internal threads 18, 19 to engage with the external thread 11 on the shank 10. The body 13 now can be screwed onto the shank 10 for about one turn or little more until the termination abuts against the bottom face 26 of the disk 24, while being held centered in the socket 29. Lastly, the body 13 can be tightened as desired by acting on the wings 22.

A major advantage of the fastening device according to the invention resides in its quick installation feature as well as in its unexpected simple and robust construction.

A further advantage of the fastening device is that it can be installed without commanding any special care on the part of the installer, by virtue of the substantially symmetrical shape of the nut, whereby the nut can be mounted with either termination pointing upwards.

It should be understood that the fastening device described above may be modified and altered in many ways by a skilled person in the art without departing from the protection scope of the invention as defined in the following claims.

## Claims

1. A fastening device (1) for securing bathroom fittings, particularly but not exclusively for retaining a seat (2) to a WC bowl (5), being of the type which comprises a screw (8) having a long threaded shank (10) and a nut (12), characterized in that the nut (12) comprises a substantially spool-shaped body (13) formed with a passageway (17) extending axially therethrough and having two half internal threads (18,19) which are coaxial with, oppositely located from each other, projecting into said passageway (17) and spaced apart axially, said passageway (17) having sufficient dimensions to allow the half internal threads (18,19) to become disengaged from the threaded shank (10) by fitting the body (13) relative to the shank (10).

2. A fastening device (1) according to Claim 1, characterized in that it comprises centering means (23) between the screw (8) and the body (13).

3. A fastening device (1) according to Claim 2, characterized in that said centering means (23) comprises a disk (24) having a central hole (27) intended for passing the threaded shank (10) therethrough with limited clearance and an annular rim (28) which defines a socket (29) coaxial with the hole (27) and intended for engagement with limited clearance by a termination (15) of the body (13).

4. A fastening device (1) according to Claim 1, characterized in that the internal threads (18,19) and the threaded shank (10) have respective rectangular shaped threads.
